(19) Europäisches Patentamt
European Patent Office
Office européen des brevets

(11) EP 4 810 570 A1

(12) **EUROPEAN PATENT APPLICATION**
published in accordance with Art. 153(4) EPC

(43) Date of publication:
**23.09.2026 Bulletin 2026/39**

(21) Application number: **24891146.3**

(22) Date of filing: **17.10.2024**

(51) International Patent Classification (IPC):
***C08L 83/07*** *(2006.01)* ***C08L 83/05*** *(2006.01)*
***F16F 15/02*** *(2006.01)*

(52) Cooperative Patent Classification (CPC):
**C08L 83/04; F16F 15/02**

(86) International application number:
**PCT/JP2024/036949**

(87) International publication number:
**WO 2025/105104 (22.05.2025 Gazette 2025/21)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **16.11.2023 JP 2023195344**

(71) Applicant: **SHIN-ETSU CHEMICAL CO., LTD.**
**Tokyo 100-0005 (JP)**

(72) Inventors:
- **YASUDA, Hiroyuki**
  **Annaka-shi, Gunma 379-0224 (JP)**
- **HARA, Hiroyasu**
  **Annaka-shi, Gunma 379-0224 (JP)**

(74) Representative: **Schicker, Silvia**
**Wuesthoff & Wuesthoff**
**Patentanwälte und Rechtsanwalt PartG mbB**
**Schweigerstraße 2**
**81541 München (DE)**

# (54) ULTRAVIOLET-CURABLE SILICONE GEL COMPOSITION, AND SILICONE GEL CURED PRODUCT OBTAINED BY CURING SAID COMPOSITION

(57) The present invention is an ultraviolet-ray-curable silicone gel composition including the following components (A) to (D): (A) an organopolysiloxane compound having two or more alkenyl groups in one molecule: 5 to 95 parts by mass; (B) (B) an organopolysiloxane compound represented by an average formula (1): $(R^1{}_1R^2{}_2SiO_{1/2})_a(R^2{}_3SiO_{1/2})_{2-a}(R^2{}_2SiO)_b$: 5 to 95 parts by mass; (C) an organohydrogenpolysiloxane having three or more hydrosilyl groups in one molecule; and (D) a hydrosilylation reaction catalyst, in a catalytic amount. This provides: an ultraviolet-ray-curable silicone gel composition that yields excellent heat resistance, etc. after curing, that exhibits a loss factor tanδ stable over a wide frequency range, and that can be suitably used for improving reliability of the damping performance; a silicone gel cured product which is made by curing this composition; and a damping material using this cured product.

EP 4 810 570 A1

## Description

TECHNICAL FIELD

The present invention relates to: an organopolysiloxane gel composition that forms a gel-like product by irradiation with ultraviolet rays and that is useful for a damping material; a cured product thereof; and a damping material using the same.

BACKGROUND ART

Silicone gels are obtained by curing an organopolysiloxane having a reactive functional group so as to have a low crosslinking density, and they exhibit excellent heat resistance, cold resistance, adhesiveness, etc. after curing. In addition, silicone gels are gel-like and have low elastic modulus, low stress, and an excellent stress cushioning property, and are therefore widely used for a damping material for optical application and for protecting onboard electronic components and electronic members, etc.

Among these, a thermally curable addition-reactive silicone gel composition has advantages that amounts of aliphatic unsaturated groups bonded to a silicon atom and hydrogen atoms bonded to a silicon atom (Si-H groups) in one molecule of the organopolysiloxane can be freely regulated and that hardness of the gel can be freely designed by changing a ratio of the Si-H amount relative to the amount of the aliphatic unsaturated groups bonded to a silicon atom. This thermally curable addition-reactive silicone gel composition, however, requires heating for curing, and it is consequently difficult to apply the above silicone gel composition for specifically a base material or a member that has low heat resistance.

As a countermeasure to this, an ultraviolet-ray-curable silicone gel based on a radical reaction is reported (Patent Document 1). An ene-thiol reaction is used to avoid inhibition due to oxygen, and there is a merit of instant curability by ultraviolet ray irradiation for several seconds to several minutes. Meanwhile, this reaction has no curability in a dark portion, so if there are a light-shielded portion in the material, there are demerits that curing failures may occur under the light-shielded portion or additional ultraviolet ray irradiation from the side surface may be required which increase the number of steps in the process.

Meanwhile, as a countermeasure to this, an ultraviolet-ray-curable silicone gel based on a hydrosilylation reaction is reported (Patent Document 2). This gel is evaluated with penetration, but a loss factor tanδ obtained by dynamic viscoelasticity measurement is used as an index for damping performance. With a high loss factor tanδ, mechanical energy imparted to the material can be dispersed as energy such as heat, and can be attenuated. That is, without controlling this parameter, desired damping performance cannot be obtained. Further, if the loss factor tanδ largely varies over a wide frequency range, the damping performance varies.

CITATION LIST

PATENT LITERATURE

Patent Document 1: WO 2011/136170
Patent Document 2: JP 2003-213132 A

SUMMARY OF INVENTION

TECHNICAL PROBLEM

The present invention has been made in view of the above circumstances, and an object is to provide: an ultraviolet-ray-curable silicone gel composition that yields excellent heat resistance, etc. after curing, that exhibits a loss factor tanδ stable over a wide frequency range, and that can be suitably used for improving reliability of the damping performance; a silicone gel cured product which is made by curing this composition; and a damping material using this cured product.

SOLUTION TO PROBLEM

To solve the above problem, the present invention provides an ultraviolet-ray-curable silicone gel composition comprising the following components (A) to (D):

(A) an organopolysiloxane having at least two alkenyl groups in one molecule: 5 to 95 parts by mass;
(B) an organopolysiloxane represented by the following average formula (1):

$$(R^1{}_1R^2{}_2SiO_{1/2})_a(R^2{}_3SiO_{1/2})_{2-a}(R^2{}_2SiO)_b \qquad (1)$$

wherein $R^1$ represents an alkenyl group, $R^2$ is the same or different and represents an unsubstituted or substituted monovalent hydrocarbon group having 1 to 10 carbon atoms and having no alkenyl group, "a" represents 0.2 or more and less than 2, and "b" represents a positive number: 5 to 95 parts by mass, provided that a sum of the component (A) and the component (B) is 100 parts by mass;
(C) an organohydrogenpolysiloxane having at least three hydrogen atoms bonded to a silicon atom in one molecule: an amount such that hydrosilyl groups (Si-H) in the component (C) is 0.1 to 2.0 mol based on 1 mol of a sum of the alkenyl groups in the component (A) and the component (B); and
(D) a photoactive hydrosilylation reaction catalyst, in a catalytic amount,

wherein a cured product of the silicone gel composition exhibits a loss factor tanδ at 25°C and a frequency of 0.1 to 50 Hz within a range of 0.2 to 1.0.

The ultraviolet-ray-curable silicone gel composition containing the components (A) to (D) according to the present invention is the ultraviolet-ray-curable silicone gel composition that yields excellent heat resistance, etc. after curing, that exhibits a loss factor tanδ stable over a wide frequency range, and that can be suitably used for improving reliability of the damping performance.

In addition, the present invention provides a silicone gel cured product which is made by curing the above ultraviolet-ray-curable silicone gel composition.

Such a silicone gel cured product yields excellent heat resistance, etc., exhibits a loss factor tanδ stable over a wide frequency range, and is useful as a damping material that is usable for improving reliability of the damping performance.

The present invention provides a silicone gel composition, wherein a cured product of the silicone gel composition exhibits a loss factor tanδ at 25°C and a frequency of 0.1 to 50 Hz within a range of 0.2 to 1.0.

Such a silicone gel composition is the silicone gel composition that yields excellent heat resistance, etc. after curing, that exhibits a loss factor tanδ stable over a wide frequency range, and that can be suitably used for improving reliability of the damping performance.

The silicone gel composition is preferably ultraviolet-ray curable.

Such an ultraviolet-ray-curable silicone gel composition is the ultraviolet-ray-curable silicone gel composition that yields excellent heat resistance, etc. after curing, that exhibits a loss factor tanδ stable over a wide frequency range, and that can be suitably used for improving reliability of the damping performance.

Further, the silicone gel composition preferably comprises the following components (A) to (D):

(A) an organopolysiloxane having at least two alkenyl groups in one molecule;
(B) an organopolysiloxane represented by the following average formula (1):

$$(R^1{}_1R^2{}_2SiO_{1/2})_a(R^2{}_3SiO_{1/2})_{2-a}(R^2{}_2SiO)_b \qquad (1)$$

wherein $R^1$ represents an alkenyl group, $R^2$ is the same or different and represents an unsubstituted or substituted monovalent hydrocarbon group having 1 to 10 carbon atoms and having no alkenyl group, "a" represents 0.2 or more and less than 2, and "b" represents a positive number;
(C) an organohydrogenpolysiloxane having at least three hydrogen atoms bonded to a silicon atom in one molecule; and
(D) a photoactive hydrosilylation reaction catalyst.

Such a silicone gel composition containing the components (A) to (D) is the silicone gel composition that yields excellent heat resistance, etc. after curing, that exhibits a loss factor tanδ stable over a wide frequency range, and that can be suitably used for improving reliability of the damping performance.

The present invention provides a silicone gel cured product which is made by curing the silicone gel composition, wherein a cured product of the silicone gel composition exhibits a loss factor tanδ at 25°C and a frequency of 0.1 to 50 Hz within a range of 0.2 to 1.0.

Such a silicone gel cured product yields excellent heat resistance, etc., exhibits a loss factor tanδ stable over a wide frequency range, and is useful as a damping material that can be suitably used for improving reliability of the damping performance.

In the present invention, the cured product (the silicone gel cured product) of the above ultraviolet-ray-curable

silicone gel composition or the above silicone gel composition is used for a damping material.

By using the silicone gel cured product described above for a damping material, a damping material can be provided that has excellent heat resistance, etc., that exhibits a loss factor tanδ stable over a wide frequency range, and that can be suitably used for improving reliability of the damping performance.

ADVANTAGEOUS EFFECTS OF INVENTION

As described above, the ultraviolet-ray-curable silicone gel composition of the present invention can provide: the ultraviolet-ray-curable silicone gel composition that yields excellent heat resistance, etc. after curing, that exhibits a loss factor tanδ stable over a wide frequency range, and that can be suitably used for improving reliability of the damping performance; the silicone gel cured product which is made by curing this composition; and the damping material using this cured product.

DESCRIPTION OF EMBODIMENTS

As noted above, there has been a demand for development of: the ultraviolet-ray-curable silicone gel composition that yields excellent heat resistance, etc. after curing, that exhibits a loss factor tanδ stable over a wide temperature range, and that can be suitably used for improving reliability of the damping performance; the silicone gel cured product which is made by curing this composition; and the damping material using this cured product.

As a result of earnest studies to achieve the above object, the present inventors have found that a specific ultraviolet-ray-curable silicone gel composition according to the present invention provides the ultraviolet-ray-curable silicone gel composition that exhibits a loss factor tanδ stable over a wide frequency range compared with conventional silicone gel compositions, and that leads to improvement in reliability, leading to completion of the present invention.

Specifically, the present invention is an ultraviolet-ray-curable silicone gel composition containing the following components (A) to (D):

(A) an organopolysiloxane having at least two alkenyl groups in one molecule: 5 to 95 parts by mass;

(B) an organopolysiloxane represented by the following average formula (1):

$$(R^1{}_1R^2{}_2SiO_{1/2})_a(R^2{}_3SiO_{1/2})_{2-a}(R^2{}_2SiO)_b \qquad (1)$$

wherein $R^1$ represents an alkenyl group, $R^2$ is the same or different and represents an unsubstituted or substituted monovalent hydrocarbon group having 1 to 10 carbon atoms and having no alkenyl group, "a" represents 0.2 or more and less than 2, and "b" represents a positive number: 5 to 95 parts by mass, provided that a sum of the component (A) and the component (B) is 100 parts by mass;

(C) an organohydrogenpolysiloxane having at least three hydrogen atoms bonded to a silicon atom in one molecule: an amount such that hydrosilyl groups (Si-H) in the component (C) is 0.1 to 2.0 mol based on 1 mol of a sum of the alkenyl groups in the component (A) and the component (B); and

(D) a photoactive hydrosilylation reaction catalyst, in a catalytic amount,

wherein a cured product of the silicone gel composition exhibits a loss factor tanδ at 25°C and a frequency of 0.1 to 50 Hz within a range of 0.2 to 1.0.

Hereinafter, the present invention will be described in detail, but the present invention is not limited thereto.

[Component (A)]

The organopolysiloxane of the component (A) has at least two, preferably two to six, alkenyl groups bonded to a silicon atom in one molecule. The alkenyl group preferably has 2 to 8 carbon atoms, and specific examples thereof include a vinyl group, an allyl group, a butenyl group, a pentenyl group, a hexenyl group, and a heptenyl group, and the alkenyl group is particularly preferably a vinyl group.

Examples of an organic group bonded to a silicon atom other than the aforementioned alkenyl group include an unsubstituted or substituted monovalent hydrocarbon group having 1 to 10 carbon atoms and having no aliphatic unsaturated bond, and specific examples thereof include a linear alkyl group, a branched alkyl group, a cyclic alkyl group, an aryl group, an aralkyl group, and a halogenated alkyl group. Preferable examples of the linear alkyl group include those having 1 to 10 carbon atoms such as a methyl group, an ethyl group, a propyl group, a hexyl group, an octyl group, and a decyl group, and more preferably those having 1 to 6 carbon atoms. Preferable examples of the branched alkyl group include those having 1 to 10 carbon atoms such as an isopropyl group, an isobutyl group, a tert-butyl group, and a 2-ethylhexyl group, and more preferably those having 1 to 6 carbon atoms. Preferable examples of the cyclic alkyl group

include those having 3 to 10 carbon atoms such as a cyclopentyl group and a cyclohexyl group. Preferable examples of the aryl group include those having 6 to 10 carbon atoms such as a phenyl group and a tolyl group. Preferable examples of the aralkyl group include those having 7 to 10 carbon atoms such as a 2-phenylethyl group and a 2-methyl-2-phenylethyl group. Preferable examples of the halogenated alkyl group include those having 1 to 10 carbon atoms such as a 3,3,3-trifluoropropyl group, a 2-(nonafluorobutyl)ethyl group, and a 2-(heptadecafluorooctyl)ethyl group, and more preferably those having 1 to 6 carbon atoms.

Among these, preferred is a linear alkyl group or an aryl group, more preferred is a linear alkyl group having 1 to 6 carbon atoms or an aryl group, and particularly preferred is a methyl group or a phenyl group.

A viscosity of the component (A) at 23°C is preferably within a range of 50 to 100,000 mPa·s, and more preferably within a range of 500 to 100,000 mPa·s. The viscosity within this range easily achieves handleability of the present composition, and easily allows the cured product of the present composition to achieve good physical properties. Note that the viscosity is a value measured with a rotary viscosimeter (manufactured by Toki Sangyo Co., Ltd, TVB-10M).

The number of repeating units of a siloxane bond in one molecule of the component (A) is 50 to 3000, preferably 50 to 2000, more preferably 100 to 1500, and further preferably 120 to 1000. When the number of repeating units is 50 or more, the resulting cured product has excellent flexibility to exhibit sufficient tanδ. When the number of repeating units is 3000 or less, the resulting cured product does not have excessively high viscosity, providing excellent workability. Note that the number of repeating units of the siloxane bond in the molecule can be measured by $^{29}$Si-NMR (the same applies to Examples).

A molecular structure of the component (A) is not particularly limited, and examples thereof include a linear structure, a branched structure, a linear structure partially having a branch, and a dendritic (dendrimer-like) structure, and the molecular structure is preferably a linear structure or a linear structure partially having a branch. The component (A) may be a homopolymer having these molecular structures, a copolymer having these molecular structures, or a mixture of two or more of these polymers.

Examples of the component (A) include dimethylpolysiloxane blocked at both terminals of the molecular chain with dimethylvinylsiloxy groups, dimethylpolysiloxane blocked at both terminals of the molecular chain with methylphenylvinylsiloxy groups, dimethylsiloxane-methylphenylsiloxane copolymer blocked at both terminals of the molecular chain with dimethylvinylsiloxy groups, dimethylsiloxane-methylvinylsiloxane copolymer blocked at both terminals of the molecular chain with dimethylvinylsiloxy groups, dimethylsiloxane-methylvinylsiloxane copolymer blocked at both terminals of the molecular chain with silanol groups, dimethylsiloxane-methylvinylsiloxane-methylphenylsiloxane copolymer blocked at both terminals of the molecular chain with silanol groups, and dimethylsiloxane-methylvinylsiloxane copolymer blocked at both terminals of the molecular chain with trimethylsiloxy groups.

The organopolysiloxane of the component (A) may be used singly, or may be used in combination of two or more thereof.

[Component (B)]

In the present invention, the component (B) is an organopolysiloxane represented by the average formula (1). This organopolysiloxane is linear polysiloxane in which molecules having vinyl groups at both terminals, molecules having a vinyl group at one terminal, and molecules having no vinyl group are mixed, and the mixing ratio is set such that "a" in the formula (1) is a number of 0.2 or more and less than 2. If this "a" is less than 0.2, an amount of the vinyl groups in the organopolysiloxane is small, thereby deteriorating curability of the composition. If "a" is 2, the component (B) becomes the organopolysiloxane contained in the component (A), and the amount of the vinyl groups in the organopolysiloxane increases to harden the cured product, which is not preferred.

In addition, in the average formula (1), $R^1$ represents an alkenyl group, $R^2$ preferably represents a linear alkyl group or an aryl group, more preferably a linear alkyl group having 1 to 6 carbon atoms or an aryl group, and is particularly preferably selected from a methyl group and a phenyl group.

As for a viscosity of the organopolysiloxane of the component (B), the viscosity at 23°C is preferably within a range of 50 to 100,000 mPa·s to effectively dispense the composition. "b" in the average formula (1) is preferably a value such that the viscosity is within the above range, and is specifically 30 to 1200, preferably 40 to 1100, more preferably 50 to 1000, and further preferably 60 to 900.

The organopolysiloxane of the component (B) can be easily manufactured by a known method, and is manufactured by, for example, an equilibration reaction of a hydrolysate of a chlorosilane such as $R^2_3SiCl$, $R^2_2SiCl_2$, and $R^1R^2_2SiCl$ in the presence of an alkali catalyst or an acid catalyst by heating or at normal temperature.

Note that, in 100 parts by mass of a sum of the component (A) and the component (B), a proportion of the component (A) is 5 to 95 parts by mass, and preferably 10 to 90 parts by mass, and softness of the silicone gel after curing, namely the loss factor tanδ, can be modified as necessary by appropriately selecting the blending ratio thereof. If the blending amount is less than 5 parts by mass, the resulting composition may have an excessively high loss factor tanδ to exhibit flowability, and if the blending amount is more than 95 parts by mass, the loss factor tanδ becomes excessively low

to harden the gel, which may deteriorate the function as the damping material.

[Component (C)]

The component (C) acts as a crosslinker for the component (A) and the component (B). This component (C) essentially contains an organohydrogenpolysiloxane having at least three or more hydrogen atoms bonded to a silicon atom (Si-H groups) in one molecule. That is, as long as this organohydrogenpolysiloxane having at least three or more Si-H groups is used, an organohydrogenpolysiloxane having only two Si-H groups can be used in combination for regulating the loss factor tanδ. Examples of the component (C) include known organosilicon compounds, and are not particularly limited. Note that the SiH group amount in the present invention can be measured by $^1$H-NMR (the same applies to Examples).

Examples of the component (C) include the following average composition formula (2).

$$H_cR^2_{3-c}SiO-(HR^2SiO)_d-(R^2_2SiO)_e-SiR^2_{3-c}H_c \qquad (2)$$

In the formula, $R^2$ is the same or different and represents an unsubstituted or substituted monovalent hydrocarbon group having 1 to 10 carbon atoms and having no alkenyl group, "c" represents 0 or 1, "d" and "e" represent integers satisfying $2c + d \geq 3$, and d + e represents a number such that a viscosity of the organohydrogenpolysiloxane of the formula (2) at 25°C is 1 to 5,000 mPa·s, and represent integers preferably satisfying $d + e \geq 4$, and further preferably satisfying $200 \geq d + e \geq 4$.

The viscosity of the organohydrogenpolysiloxane of the component (C) at 25°C with a rotary viscosimeter (manufactured by Toki Sangyo Co., Ltd, TVB-10M) is preferably 1 to 5,000 mPa·s, more preferably 1 to 2,000 mPa·s, and further preferably 5 to 500 mPa·s. This organohydrogenpolysiloxane may be a mixture of two or more thereof.

Specific examples of the monovalent hydrocarbon group of $R^2$ include the groups same as those represented by $R^2$ in the description of the component (B), and the monovalent hydrocarbon group is preferably a methyl group or a phenyl group.

The component (C) may be used singly, or may be used in combination of two or more thereof. In addition, when the organohydrogenpolysiloxane having two Si-H groups is used in combination, those with d=0 in the formula (2) may be used, for example.

A blending amount of the component (C) is an amount such that the Si-H groups in the component (C) is 0.1 to 2.0 in a mole ratio based on 1 mol of a sum of the alkenyl groups in the component (A) and the component (B), and preferably an amount such that the mole ratio is 0.1 to 1.8, and more preferably an amount such that the mole ratio is 0.1 to 1.5. If the blending amount is an amount such that the Si-H groups is less than 0.1 mol, the composition may not be sufficiently cured, and the loss factor tanδ may be more than 1. If the blending amount is an amount such that the Si-H groups is more than 2.0 mol, the resulting cured product of the silicone gel may tend to yellow by heating, and the mechanical properties may be deteriorated.

[Component (D)]

The component (D) is a photoactive hydrosilylation reaction catalyst. The photoactive hydrosilylation reaction catalyst is a catalyst that is activated by irradiation with light, specifically ultraviolet rays at 300 to 400 nm, and that enhances an addition reaction between the alkenyl groups in the component (A) and the component (B) and the hydrosilyl groups in the component (C). Examples of this photoactive hydrosilylation reaction catalyst mainly include a platinum-group-type metal catalyst and a nickel-type metal catalyst, examples of the platinum-group-type metal catalyst include platinum-type, palladium-type, and rhodium-type metal complex compounds, and examples of the nickel-type metal catalyst include nickel-type, iron-type, and cobalt-type metal complex compounds. Among these, the platinum-type metal complex compound is preferable because such a compound is relatively easily available and exhibits good catalyst activity.

The photoactive hydrosilylation reaction catalyst is activated specifically by irradiation with ultraviolet rays at 300 to 400 nm, examples thereof include a ($\eta^5$-cyclopentadienyl)tri($\sigma$-alkyl)platinum complex compound and a β-diketonatoplatinum complex compound, and specific examples thereof include (methylcyclopentadienyl)trimethylplatinum(IV), (cyclopentadienyl)trimethylplatinum(IV), (1,2,3,4,5-pentamethylcyclopentadienyl)trimethylplatinum(IV), (cyclopentadienyl)dimethylethylplatinum(IV), (cyclopentadienyl)dimethylacetylplatinum(IV), (trimethylsilylcyclopentadienyl)trimethylplatinum(IV), (methoxycarbonylcyclopentadienyl)trimethylplatinum(IV), (dimethylphenylsilylcyclopentadienyl)trimethylcyclopenta dienylplatinum(IV), trimethyl(acetylacetonato)platinum(IV), trimethyl(3,5-heptanedionate)platinum(IV), trimethyl(methylacetoacetate)platinum(IV), bis(2,4-pentanedionato)platinum(II), bis(2,4-hexanedionato)platinum(II), bis(2,4-heptanedionato)platinum(II), bis(3,5-heptanedionato)platinum(II), bis(1-phenyl-1,3-butanedionato)platinum(II), bis(1,3-diphenyl-1,3-propanedionato)platinum(II), and bis(hexafluoroacetylacetonato)platinum(II).

In using these catalysts, the catalyst may be used in a solid state when the catalyst is a solid catalyst, but it is

preferable that such a catalyst be dissolved in an appropriate solvent and then compatibilized with the silicone compound of the component (A) or the component (B) for use to obtain a more uniform cured product.

The type of the solvent for use is not particularly limited as long as the solvent can dissolve the catalyst, and the catalyst may be dissolved in silicone oil in addition to a common hydrocarbon-type solvent to eliminate a risk of the solvent remaining in the composition.

Examples of the hydrocarbon-type solvent include toluene, xylene, methyl ethyl ketone, and cyclopentanone.

As the silicone oil, the catalyst may be dissolved specifically in the organopolysiloxane having an alkenyl group, which is exemplified in the component (A) or the component (B).

When the catalyst is used as the solution, a preferable mixing ratio of the component (A) or the component (B) to the catalyst solution is in the range of 100 : 0.01 to 2.00 (by mass ratio). When the amount of the added catalyst solution is within this range, physical properties of the cured product are favorably affected, and the catalyst is dispersed in the composition. Thus, a concentration of the catalyst solution is appropriately regulated to be within this range of the mixing ratio.

A blending amount of the hydrosilylation reaction catalyst may be a catalytic amount, and in typical, the catalyst is preferably blended at a proportion of 1 to 1,000 ppm (in terms of mass of the platinum-group metal), and more preferably blended at a proportion of 3 to 500 ppm based on a total mass of the component (A) and the component (B). When the blending amount of the hydrosilylation reaction catalyst is within a range of 1 ppm or more and 1,000 ppm or less, the addition reaction is enhanced to cure the silicone composition, which yields sufficient heat resistance of the resulting silicone gel.

The hydrosilylation reaction catalyst of the component (D) may be used singly, or may be used in combination of two or more thereof.

[Other components]

In the present composition, the following blending agents represented by a component (E) (a controlling agent) are optionally added in addition to the components (A) to (D).

[Component (E)]

The component (E) is a controlling agent (a curing controlling agent) for the hydrosilylation reaction catalyst, and is an optional component. The component (E) may be added to prevent the composition from having increased viscosity or gelling before the photocuring, for example, during preparation of the silicone gel composition of the present invention or during use of the composition. Examples thereof include: acetylene alcohols such as 1-ethynyl-1-hydroxycyclohexane, 3-methyl-1-butyn-3-ol, 3,5-dimethyl-1-hexyn-3-ol, 3-methyl-1-penten-3-ol, and phenylbutynol; 3-methyl-3-penten-1-yne, 3,5-dimethyl-3-hexen-1-yne, and dimethylbis(1,1-dimethyl-2-propynyloxy)silane; polymethylvinylsiloxane cyclic compounds; and organophosphorus compounds, and this addition can appropriately retain the curing reactivity and the storage stability. Note that the component (E) may be used singly, or may be used in combination of two or more thereof.

A blending amount of the component (E) is within a range of 0 to 5 parts by mass based on 100 parts by mass of a sum of the component (A), the component (B), and the component (C), and when the component (E) is blended, the amount is preferably within a range of 0.0002 to 5 parts by mass, and more preferably within a range of 0.0004 to 4 parts by mass. When the blending amount is 5 parts by mass or less, the resulting composition exhibits sufficient curability.

(Filler)

In addition thereto, examples of an inorganic filler include: silica-type fillers such as surface-untreated or surface-hydrophobizing-treated aerosol silica (fumed silica, dry silica), precipitation silica (wet silica), colloidal silica, sol-gel silica, crystalline silica (quartz fine powder), fused silica, and crushed silica; and iron oxide, zinc oxide, titanium oxide, calcium carbonate, magnesium carbonate, zinc carbonate, and carbon black, and the addition can regulate hardness and mechanical strength of the gel-like cured product obtained from the present composition. A hollow inorganic filler or a rubbery spherical filler may be added.

(Adhesiveness-imparting agent)

In addition, a known adhesiveness-imparting agent having an epoxy group, an alkoxy group, etc. may be added to impart adhesiveness.

(Hardness-regulating material)

Further, in the ultraviolet-ray-curable silicone gel composition of the present invention, a non-crosslinkable organopolysiloxane having no hydrogen atom bonded to a silicon atom and no alkenyl group may be added for a purpose of, for example, regulating hardness of the silicone gel cured product.

An amount of the above other components to be used may be any amount according to the characteristics of the resulting ultraviolet-ray-curable silicone gel composition and physical properties of the cured product thereof.

[Cured product]

The ultraviolet-ray-curable silicone gel composition of the present invention containing the above components can form the cured product that yields excellent heat resistance, etc., that exhibits a loss factor tanδ stable over a wide frequency range, and that can be suitably used for improving reliability of the damping performance, by curing the silicone gel composition. Since the ultraviolet-ray-curable silicone gel composition of the present invention uses the photoactive hydrosilylation reaction catalyst, this composition can be cured by injecting this composition into an appropriate mold, applying this composition on an appropriate substrate, or potting, and then irradiating the composition with light.

Here, light for irradiation in the curing is preferably near ultraviolet rays (hereinafter, which may be simply referred to as ultraviolet rays). The active ray species used for curing the ultraviolet-ray-curable silicone gel composition of the present invention to obtain the silicone gel cured product is not particularly limited, and the ultraviolet rays for irradiation may be light having a plurality of emission spectra or light having a single emission spectrum.

Examples of the light having a plurality of emission spectra include: lamps such as a metal halide lamp, a xenon lamp, a carbon arc lamp, a chemical lamp, a sodium lamp, a low-pressure mercury lamp, a highpressure mercury lamp, and an ultrahigh-pressure mercury lamp; gas lasers such as nitrogen; liquid lasers such as an organic dye solution; and solid lasers in which rare-earth ions are contained in an inorganic single crystal.

The light having a single emission spectrum is light having a peak (namely, a maximum peak wavelength) within a range of 300 to 400 nm, preferably 350 to 380 nm. Examples of a light source for irradiation with such light include an ultraviolet ray emission diode (ultraviolet ray LED) and an ultraviolet ray emission semiconductor element light source such as an ultraviolet ray emission semiconductor laser.

The useful ultraviolet ray wavelength range is 220 to 400 nm, and more preferably 320 nm to 380 nm. When the light having a plurality of emission spectra is used, a band-pass filter, etc. that can cut off wavelength other than 365 nm may be used, for example, for irradiation only at a predetermined wavelength.

An ultraviolet ray irradiation dose (illuminance) is not particularly limited as long as it is an irradiation dose sufficient for curing, and the integrated light dose is preferably 1,000 to 20,000 $mJ/cm^2$, and more preferably 2,000 to 15,000 $mJ/cm^2$. When the ultraviolet ray irradiation dose (illuminance) is within the above range, energy sufficient for activating the photoactive hydrosilylation reaction catalyst in the composition can be obtained, and the cured product having sufficient physical properties can be obtained.

The light irradiation device is not particularly limited, and irradiation devices such as a spot-type irradiation device, a surface-type irradiation device, a line-type irradiation device, and a conveyer-type irradiation device may be used, for example.

In curing the ultraviolet-ray-curable silicone gel composition of the present invention, a time for the light irradiation is, for example, 1 to 300 seconds, preferably 10 to 200 seconds, and more preferably 30 to 150 seconds, although depending on the illuminance of used light, and the composition can lose flowability after 1 to 60 minutes, specifically 5 to 40 minutes, from the light irradiation to obtain the silicone gel cured product.

In addition, an environment temperature in the photocuring affects the curing time. That is, a time required for completing the curing becomes longer at a lower temperature and inversely becomes shorter at a higher temperature. For a purpose of utilizing the merit of photocuring, the environment temperature in the curing is preferably 10 to 120°C. When the environment temperature in the curing is within this range, the curing does not require a long time, and the base material does not cause thermal deterioration (thermal deformation and thermal coloring).

[Damping material]

The silicone gel cured product which is made by curing the ultraviolet-ray-curable silicone gel composition of the present invention can be utilized as an excellent damping material due to its dynamic viscoelasticity properties. That is, this gel-like cured product has high damping property and stable frequency dependency of the loss factor tanδ of 0.2 to 1.0 over a wide frequency range (0.1 Hz to 50 Hz).

In addition, a portion where vibration reduction or damping is required may have a complex component shape in some package designs, and the irradiation light may not sufficiently spread throughout the silicone gel composition. For such a concern, the hydrosilylation reaction having dark-portion curability is useful because the dark portion can be

sufficiently cured with time after the light irradiation. Further, the cured product can be formed by supplying the ultraviolet-ray-curable silicone gel composition also onto a base material having a dark portion that cannot be directly irradiated with ultraviolet rays, and irradiation with ultraviolet rays after the supplying to cure the silicone composition.

In addition, the damping properties of the damping material can be regulated by changing the blending proportions of the components of the ultraviolet-ray-curable silicone gel composition within the above ranges.

EXAMPLE

Hereinafter, the present invention will be specifically described by using Examples and Comparative Examples, but the present invention is not limited thereto. Components (raw materials) used in Examples and Comparative Examples will be described below. Note that the molecular structure of each compound was determined by $^{1}H$- and $^{29}Si$-NMR.

Components (raw materials) used in Examples and Comparative Examples

Component (A)

(A-1): Dimethylpolysiloxane blocked at both terminals of the molecular chain with dimethylvinylsiloxy groups having a viscosity of 5,000 mPa·s

$$(CH_2{=}CH(CH_3)_2SiO_{1/2})_2((CH_3)_2SiO)_{460}$$

(A-2): Dimethylpolysiloxane blocked at both terminals of the molecular chain with dimethylvinylsiloxy groups having a viscosity of 30,000 mPa·s

$$(CH_2{=}CH(CH_3)_2SiO_{1/2})_2((CH_3)_2SiO)_{740}$$

Component (B): Dimethylpolysiloxane-containing polysiloxane blocked at one terminal of the molecular chain with a dimethylvinylsiloxy group and blocked at the other terminal of the molecular chain with a trimethylsiloxy group, and having a viscosity of 800 mPa·s regulated by a method described in Example of JP 2849027 B.

$$(CH_2{=}CH(CH_3)_2SiO_{1/2})_{1.9}((CH_3)_3SiO_{1/2})_{0.1}((CH_3)_2SiO)_{85}\ (a=1.9)$$

Component (C)

(C-1): Organohydrogenpolysiloxane 1

$$(H(CH_3)_2SiO_{1/2})_2(H(CH_3)SiO)_2((CH_3)_2SiO)_{14}$$

(C-2): Organohydrogenpolysiloxane 2

$$((CH_3)_3SiO_{1/2})_2(H(CH_3)SiO)_3((CH_3)_2SiO)_{27}$$

(C-3): Organohydrogenpolysiloxane 3

$$((CH_3)_3SiO_{1/2})_2(H(CH_3)SiO)_{16}((CH_3)_2SiO)_{28}$$

(C-4): Organohydrogenpolysiloxane 4

$$(H(CH_3)_2SiO_{1/2})_2((CH_3)_2SiO)_{18}$$

Component (D): Photoactive hydrosilylation reaction catalyst

(Methylcyclopentadienyl)trimethylplatinum (IV) / [dimethylpolysiloxane blocked at both terminals of the molecular chain with dimethylvinylsiloxy groups (viscosity: 600 mPa·s)] = 0.5%/99.5%

Component (E): Curing controlling agent Dimethylbis(1,1-dimethyl-2-propinyloxy)silane

[Examples 1 to 4 and Comparative Examples 1 to 4]

The above components (raw materials) were used to prepare ultraviolet-ray-curable silicone gel compositions shown in Table 1. Note that the blending amount in Table 1 represents a mass.

Dynamic viscoelasticity measurement

(Sample production)

In Examples 1 to 4 and Comparative Examples 1 to 4, a dynamic viscoelasticity measuring apparatus (manufactured by TA Instruments LLC, trade name: ARES-G2) was used for measuring dynamic viscoelasticity. Each composition was placed on a stainless-steel parallel disk (GEOM DISP DISC 316 SST) being a lower measurement portion in the above apparatus and having a diameter of 20 mm, sandwiched with a quartz disk (Upper UV Geometry assembly) having a reflective mirror assembly in an upper measurement portion and having a diameter of 20 mm, and a distance between tools of the upper and lower parallel disks was set to 1.0 mm. In this time, an excess composition forced out to the outer peripheral portion of the parallel disks was removed. By using an UV-LED irradiation apparatus at a wavelength of 365 nm (BlueWave MX-150 - RediCure 365 nm, manufactured by Dymax Corporation), the hydrosilylation reaction catalyst was activated by irradiation at an illuminance of 100 mW/cm$^2$ at 25°C for 90 seconds, and then the composition was left to stand at 40°C for 2 hours to sufficiently enhance the addition curing reaction.

(Measurement)

Thereafter, as for the cured product produced on the apparatus, a loss factor tan$\delta$ at 25°C, a strain value of 10%, and a frequency of 0.1, 1, 10, or 50 Hz was measured. Note that this measurement was performed with a shearing mode. Table 1 shows the results.

High-temperature high-humidity test

As for Examples 1 to 4, a silicone gel cured product was produced in the same manner as in the above dynamic viscoelasticity measurement. This cured product was left at a temperature of 85°C and a humidity of 85%RH (relative humidity) for 1000 hours, and then the loss factor tan$\delta$ at 25°C and a frequency of 10 Hz was measured with a dynamic viscoelasticity measuring apparatus (manufactured by TA Instruments LLC, ARES-G2). Table 1 shows the results.

[Table 1]

| Silicone gel composition | | Example | | | | Comparative Example | | | |
|---|---|---|---|---|---|---|---|---|---|
| | | 1 | 2 | 3 | 4 | 1 | 2 | 3 | 4 |
| Blending amount | A-1 | 10 | 20 | | 90 | 100 | 100 | | 90 |
| | A-2 | | | 25 | | | | | |
| | B | 90 | 80 | 75 | 10 | | | 100 | 10 |
| | C-1 | 0.21 | | | | | | | |
| | C-2 | | 3.25 | 2.58 | | 1.92 | | | |
| | C-3 | | | | 0. 12 | | 0.48 | 0.70 | |
| | C-4 | | | | 1. 76 | | | | 2. 17 |
| | D | 0.33 | 0.33 | 0.33 | 0.33 | 0.33 | 0.33 | 0.33 | 0.33 |
| | E | 0.002 | 0.002 | 0.002 | 0.002 | 0.002 | 0.002 | 0.002 | 0.002 |
| SiH(C) / SiVi(A+B) mole ratio | | 0.72 | 0.95 | 0.88 | 0.45 | 0.37 | 0.40 | 0.90 | 0.45 |
| Dynamic viscoelasticity measurement (tan δ ) | 0.1Hz | 0.24 | 0.31 | 0.71 | 0.53 | 3. 73 | 0.09 | 0.03 | Unmeasurable |
| | 1Hz | 0.55 | 0.54 | 0.85 | 0.62 | 2. 78 | 0.39 | 0.17 | 109 |
| | 10Hz | 0.80 | 0. 79 | 0.86 | 0.51 | 2. 16 | 0.99 | 0.58 | 12. 6 |
| | 50Hz | 0.87 | 0.89 | 0.88 | 0.38 | 1.55 | 1.23 | 0.98 | 3.02 |
| High-temperature high-humidity test (tan δ ) | 10Hz | 0. 79 | 0. 77 | 0.85 | 0.51 | - | - | - | - |

As shown in Table 1, the silicone gel cured products using the ultraviolet-ray-curable silicone gel composition of the present invention in Examples 1 to 4 exhibited stable and appropriate loss factor tanδ over a wide frequency range of 0.1 Hz to 50 Hz. Further, in the high-temperature high-humidity test, almost no change in the loss factor tanδ at 10 Hz was observed from the loss factor tanδ at 10 Hz before the test. From these results, it was able to be confirmed that the cured product using the ultraviolet-ray-curable silicone gel composition of the present invention had excellent damping property and heat resistance.

Meanwhile, in Comparative Example 1 and Comparative Example 2, which did not contain the component (B) being the essential component for the present invention, and in Comparative Example 3, which did not contain the component (A) being the essential component, the loss factor tanδ considerably changed from 0.1 Hz to 50 Hz in the dynamic viscoelasticity measurement test. In addition, Comparative Example 4 in which the component (C) being the essential component for the present invention was only the organohydrogenpolysiloxane ((C-4)), which did not have three Si-H groups, caused insufficient curing. From these results, it was able to be confirmed that compositions lacking the essential component for the present invention exhibited a poor damping property.

From the above, it has been revealed that the present invention can provide the ultraviolet-ray-curable silicone gel composition that yields excellent heat resistance, etc. after curing, that exhibits a loss factor tanδ stable over a wide frequency range, and that can be suitably used for improving reliability of the damping performance.

It should be noted that the present invention is not limited to the above-described embodiments. The embodiments are just examples, and any examples that substantially have the same feature and demonstrate the same functions and effects as those in the technical concept disclosed in claims of the present invention are included in the technical scope of the present invention.

## Claims

**1.** An ultraviolet-ray-curable silicone gel composition, comprising the following components (A) to (D):

(A) an organopolysiloxane having at least two alkenyl groups in one molecule: 5 to 95 parts by mass;
(B) an organopolysiloxane represented by the following average formula (1):

$$(R^1{}_1R^2{}_2SiO_{1/2})_a(R^2{}_3SiO_{1/2})_{2-a}(R^2{}_2SiO)_b \qquad (1)$$

wherein $R^1$ represents an alkenyl group, $R^2$ is the same or different and represents an unsubstituted or substituted monovalent hydrocarbon group having 1 to 10 carbon atoms and having no alkenyl group, "a" represents 0.2 or more and less than 2, and "b" represents a positive number: 5 to 95 parts by mass, provided that a sum of the component (A) and the component (B) is 100 parts by mass;

(C) an organohydrogenpolysiloxane having at least three hydrogen atoms bonded to a silicon atom in one molecule: an amount such that hydrosilyl groups (Si-H) in the component (C) is 0.1 to 2.0 mol based on 1 mol of a sum of the alkenyl groups in the component (A) and the component (B); and

(D) a photoactive hydrosilylation reaction catalyst, in a catalytic amount,

wherein a cured product of the silicone gel composition exhibits a loss factor tanδ at 25°C and a frequency of 0.1 to 50 Hz within a range of 0.2 to 1.0.

2. A silicone gel cured product which is made by curing the ultraviolet-ray-curable silicone gel composition according to claim 1.

3. A silicone gel composition, wherein a cured product of the silicone gel composition exhibits a loss factor tanδ at 25°C and a frequency of 0.1 to 50 Hz within a range of 0.2 to 1.0.

4. The silicone gel composition according to claim 3, wherein the silicone gel composition is ultraviolet-ray curable.

5. The silicone gel composition according to claim 3, wherein the silicone gel composition comprises the following components (A) to (D):

(A) an organopolysiloxane having at least two alkenyl groups in one molecule;

(B) an organopolysiloxane represented by the following average formula (1):

$$(R^1{}_1R^2{}_2SiO_{1/2})_a(R^2{}_3SiO_{1/2})_{2-a}(R^2{}_2SiO)_b \qquad (1)$$

wherein $R^1$ represents an alkenyl group, $R^2$ is the same or different and represents an unsubstituted or substituted monovalent hydrocarbon group having 1 to 10 carbon atoms and having no alkenyl group, "a" represents 0.2 or more and less than 2, and "b" represents a positive number;

(C) an organohydrogenpolysiloxane having at least three hydrogen atoms bonded to a silicon atom in one molecule; and

(D) a photoactive hydrosilylation reaction catalyst.

6. A silicone gel cured product which is made by curing the silicone gel composition according to claim 3.

7. The silicone gel cured product according to claim 2 or 6, wherein the silicone gel cured product is used for a damping material.

**INTERNATIONAL SEARCH REPORT**

International application No. **PCT/JP2024/036949**

**A. CLASSIFICATION OF SUBJECT MATTER**

***C08L 83/07***(2006.01)i; ***C08L 83/05***(2006.01)i; ***F16F 15/02***(2006.01)i
FI: C08L83/07; C08L83/05; F16F15/02 Q

According to International Patent Classification (IPC) or to both national classification and IPC

**B. FIELDS SEARCHED**

Minimum documentation searched (classification system followed by classification symbols)

C08L83/07; C08L83/05; F16F15/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| Y | JP 2017-25232 A (SHIN-ETSU CHEMICAL CO., LTD.) 02 February 2017 (2017-02-02) claims 1, 3, example 2, table 1 | 1-7 |
| Y | JP 2017-226832 A (MOMENTIVE PERFORMANCE MATERIALS JAPAN LLC) 28 December 2017 (2017-12-28) claim 1, paragraph [0068], examples 1-9, tables 1-3 | 1-6 |
| Y | JP 2019-218495 A (SHIN-ETSU CHEMICAL CO., LTD.) 26 December 2019 (2019-12-26) claim 1, paragraph [0009] | 1-7 |
| Y | JP 2003-213132 A (SHIN-ETSU CHEMICAL CO., LTD.) 30 July 2003 (2003-07-30) claim 1, paragraphs [0003]-[0004], examples | 1-7 |
| Y | JP 2013-87199 A (SHIN-ETSU CHEMICAL CO., LTD.) 13 May 2013 (2013-05-13) claim 1, paragraph [0007], examples | 1-7 |
| A | JP 2022-136382 A (SHIN-ETSU CHEMICAL CO., LTD.) 21 September 2022 (2022-09-21) | 1-7 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **12 December 2024** | **07 January 2025** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/036949**

| Patent document cited in search report | Publication date (day/month/year) | Patent family member(s) | Publication date (day/month/year) |
|---|---|---|---|
| JP 2017-25232 A | 02 February 2017 | US 2018/0201786 A1<br>claims 1, 3, example 2, table 1<br>EP 3327087 A1<br>WO 2017/018033 A1 | |
| JP 2017-226832 A | 28 December 2017 | US 2019/0153227 A1<br>claim 1, paragraph [0115], examples 1-9, tables 1-3<br>WO 2017/217510 A1<br>EP 3473677 A1<br>TW 201815971 A<br>KR 10-2019-0018703 A<br>CN 109415565 A | |
| JP 2019-218495 A | 26 December 2019 | (Family: none) | |
| JP 2003-213132 A | 30 July 2003 | (Family: none) | |
| JP 2013-87199 A | 13 May 2013 | US 2013/0096223 A1<br>claim 1, paragraph [0007], examples<br>EP 2584003 A1 | |
| JP 2022-136382 A | 21 September 2022 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2011136170 A
- JP 2003213132 A
- JP 2849027 B